(19) Europäisches Patentamt
European Patent Office
Office européen des brevets

(11) **EP 4 635 921 A1**

(12) **EUROPEAN PATENT APPLICATION**
published in accordance with Art. 153(4) EPC

(43) Date of publication:
**22.10.2025 Bulletin 2025/43**

(21) Application number: **23903577.7**

(22) Date of filing: **14.12.2023**

(51) International Patent Classification (IPC):
**C03C 3/32** (2006.01)    **G02B 1/00** (2006.01)

(52) Cooperative Patent Classification (CPC):
**C03C 3/32; G02B 1/00**

(86) International application number:
**PCT/JP2023/044915**

(87) International publication number:
**WO 2024/128294 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022 JP 2022201224**

(71) Applicant: **Nippon Electric Glass Co., Ltd.
Otsu-shi, Shiga 520-8639 (JP)**

(72) Inventors:
• **KOBAYASHI, Yuta
Otsu-shi Shiga 520-8639 (JP)**
• **FUKUMOTO, Shotaro
Otsu-shi Shiga 520-8639 (JP)**
• **SATO, Fumio
Otsu-shi Shiga 520-8639 (JP)**

(74) Representative: **Henkel & Partner mbB
Patentanwaltskanzlei, Rechtsanwaltskanzlei
Maximiliansplatz 21
80333 München (DE)**

(54) **HALIDE GLASS AND OPTICAL ELEMENT**

(57)    Provided are a halide glass comparable in dispersion characteristics to fluorite and an optical element. The halide glass comprises, in terms of mol%, 15-29%, excluding 29%, $AlF_3$, 5-40% $YF_3$, and 26-80% $MgF_2$ +$CaF_2$+$SrF_2$+$BaF_2$.

EP 4 635 921 A1

## Description

TECHNICAL FIELD

The present invention relates to a halide glass and an optical element.

BACKGROUND ART

In optical systems such as a camera, lenses made of a low dispersion material are used to correct chromatic aberration. For example, fluorite is known as a representative low dispersion material.

On the other hand, fluorite has poor formability and processability, making lens manufacturing time-consuming and costly. Therefore, as an alternative material to fluorite, for example, a fluoride glass having an Abbe number (vd) similar to that of fluorite, and a halide glass such as a fluorophosphate glass are being investigated (Patent Literatures 1 and 2).

CITATION LIST

PATENT LITERATURE

Patent Literature 1: JP2019-151493A
Patent Literature 2: JP2016-023111A

SUMMARY OF INVENTION

TECHNICAL PROBLEM

In addition to being low dispersion, fluorite also exhibits a high partial dispersion ratio (anomalous partial dispersibility). Therefore, no halide glass having dispersion properties comparable to those of fluorite is known, and further investigation is required.

In view of the above, an object of the present invention to provide a halide glass and an optical element having dispersion properties comparable to those of fluorite.

SOLUTION TO PROBLEM

Hereinafter, each aspect of a halide glass that solves the above problems will be described.

A halide glass according to Aspect 1 contains, in mol%, from 15% to less than 29% of $AlF_3$, from 5% to 40% of $YF_3$, and from 26% to 80% of $MgF_2+CaF_2+SrF_2+BaF_2$. Here, "$MgF_2+CaF_2+SrF_2+BaF_2$" refers to a total amount of $MgF_2$, $CaF_2$, $SrF_2$, and $BaF_2$.

A halide glass according to Aspect 2 is based on Aspect 1, in which $AlF_3/YF_3$ is preferably 5 or less. Here, "$AlF_3/YF_3$" refers to a value obtained by dividing the content of $AlF_3$ by the content of $YF_3$.

A halide glass according to Aspect 3 is based on Aspect 1 or Aspect 2, and preferably contains, in mol%, from 11% to 24% of $MgF_2$, from 8% to 33% of $CaF_2$, from 0% to 23% of $SrF_2$, and from 7% to 20% of $BaF_2$.

A halide glass according to Aspect 4 is based on any one aspect of Aspect 1 to Aspect 3, in which $(MgF_2+BaF_2)/(MgF_2+CaF_2+SrF_2+BaF_2)$ is preferably from 0.25 to 1. Here, "$(MgF_2+BaF_2)/(MgF_2+CaF_2+SrF_2+BaF_2)$" refers to a value obtained by dividing the total amount of $MgF_2$ and $BaF_2$ by the total amount of $MgF_2$, $CaF_2$, $SrF_2$, and $BaF_2$.

A halide glass according to Aspect 5 is based on any one aspect of Aspect 1 to Aspect 4, and preferably contains, in mol%, from 20% to 80% of $YF_3+MgF_2+BaF_2$. Here, "$YF_3+MgF_2+BaF_2$" refers to the total amount of $YF_3$, $MgF_2$, and $BaF_2$.

A halide glass according to Aspect 6 is based on any one aspect of Aspect 1 to Aspect 5, in which $AlF_3/(YF_3+MgF_2+BaF_2)$ is preferably from 0.2 to 1. Here, "$AlF_3/(YF_3+MgF_2+BaF_2)$" refers to a value obtained by dividing the content of $AlF_3$ by the total amount of $YF_3$, $MgF_2$, and $BaF_2$.

A halide glass according to Aspect 7 is based on any one aspect of Aspect 1 to Aspect 6, in which an Abbe number (vd) is preferably from 85 to 110.

A halide glass according to Aspect 8 is based on any one aspect of Aspect 1 to Aspect 7, in which a partial dispersion ratio ($\theta$g, F) is preferably from 0.515 to 0.54.

An optical element according to Aspect 9 contains the halide glass according to any one aspect of Aspect 1 to Aspect 8.

ADVANTAGEOUS EFFECTS OF INVENTION

According to the present invention, it is possible to provide a halide glass and an optical element having dispersion properties comparable to those of fluorite.

DESCRIPTION OF EMBODIMENTS

A halide glass according to the present invention contains, in mol%, from 15% to less than 29% of $AlF_3$, from 5% to 40% of $YF_3$, and from 26% to 80% of $MgF_2+CaF_2+SrF_2+BaF_2$. The reason for limiting the content of each component as described above is as follows. Note that, in the description of the content of each component, % represents mol% unless otherwise indicated.

$AlF_3$ is an essential component that enhances the stability of a glass. The content of $AlF_3$ is preferably from 15% to less than 29%, from 16% to 28.9%, from 16% to 28%, from 17% to 27%, from 18% to 26%, and particularly preferably from 20% to 25%. When the content of $AlF_3$ is too small, crystallization is likely to occur. When the content of $AlF_3$ is too large, a partial dispersion ratio ($\theta$g, F) is likely to decrease. Therefore, it is difficult to obtain dispersion properties comparable to those of fluorite. However, from the viewpoint of increasing a refractive index nd, an upper limit of the content of $AlF_3$ may be less than 20%, and particularly 19% or less.

$YF_3$ is an essential component that enhances the stability of the glass. It is a component that is particularly likely to increase the partial dispersion ratio ($\theta$g, F). The content of $YF_3$ is preferably from 5% to 40%, from 6% to 40%, from 7% to 40%, from 10% to 38%, from 12% to 38%, from 15% to 38%, from 18% to 38%, from 20% to 36%, and particularly preferably from 25% to 36%. When the content of $YF_3$ is too small, the partial dispersion ratio ($\theta$g, F) is likely to decrease. When the content of $YF_3$ is too large, crystallization is likely to occur.

$AlF_3/YF_3$ is preferably 5 or less, 4.9 or less, 4.5 or less, 4 or less, 3.9 or less, 3.5 or less, 3 or less, 2.9 or less, 2.5 or less, 2 or less, and particularly preferably 1.9 or less. When the above value is satisfied, the partial dispersion ratio ($\theta$g, F) is likely to further increase. A lower limit of $AlF_3/YF_3$ is not particularly limited, and may be, for example, 0.43 or more, 0.45 or more, and particularly 0.5 or more.

$MgF_2$, $CaF_2$, $SrF_2$, and $BaF_2$ are components that are likely to enhance the stability of the glass. The content of $MgF_2+CaF_2+SrF_2+BaF_2$ is preferably from 26% to 80%, from 30% to 78%, from 35% to 76%, from 40% to 74%, from 40% to 72%, from 40% to 70%, from 45% to 70%, from 50% to 70%, and particularly preferably more than 55% to 70%. When the content of $MgF_2+CaF_2+SrF_2+BaF_2$ is too small, the above effects are difficult to achieve. When the content of $MgF_2+CaF_2+SrF_2+BaF_2$ is too large, an Abbe number (vd) is likely to increase. In addition, the partial dispersion ratio ($\theta$g, F) is likely to decrease. Note that, a preferred content of each of the $MgF_2$, $CaF_2$, $SrF_2$, and $BaF_2$ components is as follows.

Among the above components, $MgF_2$ is a component that is likely to increase the partial dispersion ratio ($\theta$g, F) while enhancing the stability of the glass. The content of $MgF_2$ is preferably from 0% to 24%, from 1% to 24%, from 5% to 24%, from 8% to 24%, from 10% to 24%, from 11% to 24%, from 11% to 22%, and from 11% to 20%. When the content of $MgF_2$ is too large, crystallization is likely to occur. However, particularly from the viewpoint of increasing the partial dispersion ratio ($\theta$g, F), a lower limit of the content of $MgF_2$ may be 19% or more, 20% or more, and particularly more than 20%.

$CaF_2$ is a component that is likely to enhance the stability of the glass. The content of $CaF_2$ is preferably from 0% to 33%, from 1% to 33%, from 5% to 33%, from 8% to 33%, and particularly preferably from 10% to 33%. When the content of $CaF_2$ is too large, the Abbe number (vd) is likely to increase. In addition, the partial dispersion ratio ($\theta$g, F) is particularly likely to decrease.

$SrF_2$ is a component that is likely to enhance the stability of the glass. The content of $SrF_2$ is preferably from 0% to 23%, from 0% to 20%, from 0% to 15%, and particularly from 0% to 10%. When the content of $SrF_2$ is too large, crystallization is likely to occur. In addition, the partial dispersion ratio ($\theta$g, F) is likely to decrease. From the viewpoint of increasing the partial dispersion ratio ($\theta$g, F), an upper limit of the content of $SrF_2$ may be 9% or less, and particularly 7% or less.

Among the above components, $BaF_2$ is a component that is likely to increase the partial dispersion ratio ($\theta$g, F) and decrease the Abbe number (vd) while enhancing the stability of the glass. The content of $BaF_2$ is preferably from 0% to 20%, from 1% to 20%, from 3% to 20%, from 5% to 20%, from 7% to 20%, from 8.5% to 20%, from 10% to 20%, from 11% to 18%, and particularly preferably from 11% to 17%. When the content of $BaF_2$ is too large, crystallization is likely to occur.

Among the above components, when particularly $MgF_2$ and $BaF_2$ are contained as essential components, the partial dispersion ratio (0g, F) is likely to increase and the Abbe number (vd) is likely to decrease. Therefore, $MgF_2+BaF_2$ (a total amount of $MgF_2$ and $BaF_2$) is preferably more than 0% to 44%, from 1% to 44%, from 5% to 44%, from 10% to 44%, from 18% to 40%, from 20% to 40%, and particularly preferably from 22% to 38%. In addition, $(MgF_2+BaF_2)/(MgF_2+CaF_2+SrF_2+BaF_2)$ is preferably 0.01 or more, 0.03 or more, 0.05 or more, 0.1 or more, 0.2 or more, 0.25 or more, 0.3 or more, and particularly 0.5 or more. An upper limit of $(MgF_2+BaF_2)/(MgF_2+CaF_2+SrF_2+BaF_2)$ is not particularly limited, and may be, for example, 1 or less, 0.99 or less, 0.95 or less, 0.9 or less, 0.8 or less, 0.7 or less, 0.6 or less, and particularly 0.5 or less.

From the viewpoint of increasing the partial dispersion ratio ($\theta$g, F) and decreasing the Abbe number (vd), a lower limit of $MgF_2/(MgF_2+CaF_2+SrF_2+BaF_2)$ is preferably 0.01 or more, 0.03 or more, 0.05 or more, 0.1 or more, and particularly preferably 0.15 or more. An upper limit of $MgF_2/(MgF_2+CaF_2+SrF_2+BaF_2)$ is not particularly limited, and may be, for example, 1 or less, 0.99 or less, 0.95 or less, 0.9 or less, and particularly 0.8 or less. Similarly, from the viewpoint of increasing the partial dispersion ratio ($\theta$g, F) and decreasing the Abbe number (vd), a lower limit of $BaF_2/(MgF_2+CaF_2+SrF_2+BaF_2)$ is preferably 0.01 or more, 0.03 or more, 0.05 or more, and particularly preferably 0.1 or more. An upper limit of $BaF_2/(MgF_2+CaF_2+SrF_2+BaF_2)$ is not particularly limited, and may be, for example, 1 or less, 0.99 or less, 0.95 or less, 0.9 or less, 0.8 or less, 0.7 or less, 0.6 or less, and particularly 0.5 or less.

From the viewpoint of increasing the partial dispersion ratio and decreasing the Abbe number (vd) while enhancing the stability of the glass, a content of $YF_3+MgF_2+BaF_2$ is preferably from 20% to 80%, from 20% to 75%, from 25% to 75%, from 25% to 70%, and particularly preferably from 30% to 70%. When the content of $YF_3+MgF_2+BaF_2$ is too small, the above effects are difficult to achieve. When the content of $YF_3+MgF_2+BaF_2$ is too large, crystallization is likely to occur.

In particular, from the viewpoint of increasing the partial dispersion ratio ($\theta$g, F), $AlF_3/(YF_3+MgF_2+BaF_2)$ is preferably 1 or less, 0.9 or less, 0.89 or less, 0.8 or less, 0.7 or less, 0.6 or less, and particularly preferably 0.5 or less. On the other hand, from the viewpoint of preventing crystallization of the glass and stabilizing glass formation, $AlF_3/(YF_3+MgF_2+BaF_2)$ is preferably 0.18 or more, and particularly preferably 0.2 or more.

The halide glass according to the present invention may further contain other fluoride components. For example, from the viewpoint of stabilizing vitrification and obtaining desired optical properties, $NaF$, $ZrF_4$, $HfF_4$, $GaF_3$, $InF_3$, and $ZnF_2$ may each be contained in an amount of from 0% to less than 10%, less than 5%, and particularly from 0% to less than 3%, and $NaF$, $ZrF_4$, $HfF_4$, $GaF_3$, $InF_3$, and $ZnF_2$ may be contained in a total amount of from 0% to 15%, from 0% to 10%, from 0% to 5%, and particularly from 0% to 3%. In particular, from the viewpoint of stabilizing vitrification, a total amount of $ZrF_4$ and $HfF_4$ is preferably from 0% to less than 5%, and particularly from 0% to less than 3%.

The halide glass according to the present invention is a so-called fluoride glass, which contains fluoride as a main component. However, the halide glass according to the present invention may contain the following optional components in addition to fluoride.

The halide glass according to the present invention may contain a chloride component such as $AlCl_3$, $YCl_3$, $LaCl_3$, $GdCl_3$, $YbCl_3$, $MgCl_2$, $CaCl_2$, $SrCl_2$, and $BaCl_2$. When the chloride component is contained, the stability of the glass is likely to be enhanced. A total content of the chloride component is preferably 15% or less, 10% or less, and particularly 5% or less, from the viewpoint of accurately achieving the effects of the present invention. A lower limit of the content of the chloride component may be, for example, 0% or more, 0.1% or more, and particularly 0.5% or more.

The halide glass according to the present invention may contain a phosphate component such as $Al(PO_3)_3$, $Mg(PO_3)_2$, $Ca(PO_3)_2$, $Sr(PO_3)_2$, $Ba(PO_3)_2$, $P_2O_5$, and $KPF_6$. When the phosphate component is contained, the stability of the glass can be enhanced. A total content of the phosphate component is preferably 15% or less, 10% or less, and particularly preferably 5% or less, from the viewpoint of accurately achieving the effects of the present invention. A lower limit of the content of the phosphate component may be, for example, 0% or more, 0.1% or more, and particularly 0.5% or more.

From the viewpoint of reducing the influence on the environment, it is preferable that the halide glass according to the present invention does not substantially contain U, Th, Be, or Pb. For example, it is preferable that the halide glass does not substantially contain $UF_4$, $ThF_4$, $BeF_2$, or $PbF_2$. Here, "does not substantially contain" means that it is not intentionally contained as a raw material, and does not exclude containing as an unavoidable impurity. Objectively, it means that the content is less than 0.1%, and particularly less than 0.01%.

The halide glass according to the present invention may contain a rare earth ion as a light emitting component. For example, as the rare earth ions, a Tm ion, an Er ion, an Yb ion, and a Ho ion may be contained in an amount of 0% to 5% each. However, when the content of the rare earth ion is too large, vitrification tends to be unstable. Therefore, from the viewpoint of stabilizing vitrification, an upper limit of the content of the Tm ion, the Er ion, the Yb ion, and the Ho ion is preferably 3% or less, 1% or less each, and it is particularly preferable that they are not substantially contained at all.

When the halide glass according to the present invention satisfies the above composition, dispersion properties comparable to those of fluorite can be obtained. For example, the halide glass according to the present invention preferably has an Abbe number (vd) of from 85 to 110 and a partial dispersion ratio ($\theta$g, F) of from 0.515 to 0.54.

The Abbe number (vd) is preferably from 85 to 110, from 90 to 100, from 90 to 99.4, from 90 to 99.1, from 91 to 99, from 91 to 98, and particularly preferably from 92 to 98. When the above Abbe number (vd) is satisfied, the halide glass according to the present invention can be suitably used as an alternative material to fluorite.

The partial dispersion ratio ($\theta$g, F) is preferably from 0.515 to 0.54, from 0.516 to 0.5399, from 0.517 to 0.5398, from 0.517 to 0.5397, and particularly preferably from 0.517 to 0.5395. When the above partial dispersion ratio ($\theta$g, F) is satisfied, the halide glass according to the present invention exhibits anomalous partial dispersibility comparable to that of fluorite. Therefore, it can be suitably used as an alternative material to fluorite.

The halide glass according to the present invention has a refractive index (nd) of preferably from 1.4 to 1.5, and particularly preferably from 1.41 to 1.46. When the above refractive index is satisfied, the halide glass according to the present invention is comparable in terms of refractive index to fluorite and can be suitably used as an alternative material to fluorite.

The halide glass according to the present invention can be suitably used as an optical element. In other words, an optical element according to the present invention is made of the above halide glass according to the present invention. Examples of the optical element include an optical lens, a prism, a filter, a diffraction grating, and an optical fiber, with the optical lens being particularly preferred. The optical lens is preferably a low dispersion lens or a special low dispersion lens.

The halide glass according to the present invention can be prepared, for example, as follows.

First, raw materials are weighed to obtain a raw material batch having a desired composition. Next, the raw material batch is charged into a crucible. As the crucible, a platinum crucible, a gold crucible, a glassy carbon crucible, or the like can be used.

Next, the raw material batch is melted at about 900°C to 1200°C for several hours. The melt is then quenched and annealed near the glass transition temperature to obtain a halide glass.

Examples

Hereinafter, the present invention will be described in detail based on Examples, but the present invention is not limited to these Examples.

Tables 1 and 2 show Examples 1 to 12 of the present invention and Comparative Example 1.

Table 1

| | | Example 1 | Example 2 | Example 3 | Example 4 | Example 5 | Example 6 | Example 7 |
|---|---|---|---|---|---|---|---|---|
| Glass composition (mol%) | $AlF_3$ | 17.2 | 22.4 | 16.6 | 27.4 | 28.6 | 21.2 | 17.1 |
| | $YF_3$ | 30.9 | 28.6 | 30.7 | 27.0 | 16.0 | 22.5 | 31.6 |
| | $MgF_2$ | 18.4 | 18.0 | 19.4 | 17.7 | 11.0 | 15.4 | 18.2 |
| | $CaF_2$ | 13.8 | 12.7 | 13.7 | 10.2 | 17.6 | 8.5 | 13.5 |
| | $SrF_2$ | 4.6 | 4.3 | 4.6 | 10.2 | 13.9 | 13.5 | 4.6 |
| | $BaF_2$ | 15.1 | 14.0 | 15.0 | 7.5 | 12.9 | 18.9 | 15.0 |
| $MgF_2+CaF_2+SrF_2+BaF_2$ | | 51.9 | 49.0 | 52.7 | 45.6 | 55.4 | 56.3 | 51.3 |
| $AlF_3/YF_3$ | | 0.56 | 0.78 | 0.54 | 1.01 | 1.79 | 0.94 | 0.54 |
| $MgF_2+BaF_2$ | | 33.5 | 32 | 34.4 | 25.2 | 23.9 | 34.3 | 33.2 |
| $(MgF_2+BaF_2)/(MgF_2+CaF_2+SrF_2+BaF_2)$ | | 0.65 | 0.65 | 0.65 | 0.55 | 0.43 | 0.61 | 0.65 |
| $MgF_2/(MgF_2+CaF_2+SrF_2+BaF_2)$ | | 0.35 | 0.37 | 0.37 | 0.39 | 0.20 | 0.27 | 0.35 |
| $BaF_2/(MgF_2+CaF_2+SrF_2+BaF_2)$ | | 0.29 | 0.29 | 0.28 | 0.16 | 0.23 | 0.34 | 0.29 |
| $YF_3+MgF_2+BaF_2$ | | 64.4 | 60.6 | 65.1 | 52.2 | 39.9 | 56.8 | 64.8 |
| $AlF_3/(YF_3+MgF_2+BaF_2)$ | | 0.27 | 0.37 | 0.25 | 0.52 | 0.72 | 0.37 | 0.26 |
| $n_d$ | | 1.45249 | 1.44334 | 1.45325 | 1.41638 | 1.43648 | 1.45171 | 1.45465 |
| Vd | | 93.7 | 94.8 | 93.3 | 92.4 | 96.7 | 94.6 | 94.0 |
| $\theta_{g.F}$ | | 0.5376 | 0.5377 | 0.5216 | 0.523 | 0.5174 | 0.526 | 0.535 |

Table 2

| | | Example 8 | Example 9 | Example 10 | Example 11 | Example 12 | Comparative Example 1 |
|---|---|---|---|---|---|---|---|
| Glass composition (mol%) | $AlF_3$ | 21.9 | 21.1 | 27.0 | 17.2 | 23.5 | 31.0 |
| | $YF_3$ | 29.1 | 33.8 | 5.4 | 27.6 | 21.0 | 6.2 |
| | $MgF_2$ | 18.4 | 16.9 | 17.3 | 18.4 | 13.2 | 19.9 |
| | $CaF_2$ | 12.0 | 11.3 | 33.0 | 13.8 | 10.2 | 23.0 |
| | $SrF_2$ | 4.4 | 0.0 | 10.0 | 4.6 | 14.6 | 11.5 |
| | $BaF_2$ | 14.2 | 16.9 | 7.3 | 18.4 | 17.5 | 8.4 |
| $MgF_2+CaF_2+SrF_2+BaF_2$ | | 49 | 45.1 | 67.6 | 55.2 | 55.5 | 62.8 |
| $AlF_3/YF_3$ | | 0.75 | 0.62 | 5.00 | 0.62 | 1.12 | 5.00 |
| $MgF_2+BaF_2$ | | 32.6 | 33.8 | 24.6 | 36.8 | 30.7 | 28.3 |
| $(MgF_2+BaF_2)/(MgF_2+CaF_2+SrF_2+BaF_2)$ | | 0.67 | 0.75 | 0.36 | 0.67 | 0.55 | 0.45 |
| $MgF_2/(MgF_2+CaF_2+SrF_2+BaF_2)$ | | 0.38 | 0.37 | 0.26 | 0.33 | 0.24 | 0.32 |
| $BaF_2/(MgF_2+CaF_2+SrF_2+BaF_2)$ | | 0.29 | 0.37 | 0.11 | 0.33 | 0.32 | 0.13 |
| $YF_3+MgF_2+BaF_2$ | | 61.7 | 67.6 | 30 | 64.4 | 51.7 | 34.5 |
| $AlF_3/(YF_3+MgF_2+BaF_2)$ | | 0.35 | 0.31 | 0.90 | 0.27 | 0.45 | 0.90 |
| $n_d$ | | 1.44705 | 1.44040 | 1.42000 | 1.45446 | 1.44770 | 1.41639 |
| Vd | | 94.3 | 94.4 | 99.1 | 93.3 | 94.9 | 99.4 |
| $\theta_{g.F}$ | | 0.5336 | 0.5255 | 0.5192 | 0.5288 | 0.5244 | 0.5142 |

Samples were prepared according to the following procedure. First, raw materials were weighed to have the compositions shown in Tables 1 and 2, and raw material batches were obtained. Next, each of the raw material batches was introduced into a crucible and melted at 900°C to 1200°C for several hours. After melting, the melt was quenched and annealed near the glass transition temperature to obtain a sample. For the obtained sample, the refractive index was measured, and the Abbe number (vd) and the partial dispersion ratio ($\theta$g, F) were determined. The results for the refractive index (nd), the Abbe number (vd), and the partial dispersion ratio ($\theta$g, F) are shown in Tables 1 and 2.

The refractive index was measured using the well-known V-block method. The measurement was carried out using a Kalnew precision refractometer (KPR-2000, manufactured by Shimadzu Corporation).

The Abbe number (vd) and the partial dispersion ratio ($\theta$g, F) were calculated according to the following equations using the measured values of the refractive indexes nd (587.56 nm), nC (656.27 nm), nF (486.07 nm), and ng (435.83 nm).

$$vd = (nd-1)/(nF-nC)$$

$$\theta g, F = (ng-nF)/(nF-nC)$$

As can be seen from Tables 1 and 2, in Examples 1 to 12, the refractive index (nd) is 1.41638 or more, the Abbe number (vd) is 99.1 or less, and the partial dispersion ratio ($\theta$g, F) is 0.5174 or more. On the other hand, in Comparative Example 1, the partial dispersion ratio ($\theta$g, F) is as small as 0.5142.

INDUSTRIAL APPLICABILITY

The halide glass according to the present invention can be suitably used as an optical element such as a lens, a prism, a filter, a diffraction grating, or an optical fiber. In particular, it can be suitably used as a low dispersion lens or a special low dispersion lens.

**Claims**

1. A halide glass comprising, in mol%, from 15% to less than 29% of $AlF_3$, from 5% to 40% of $YF_3$, and from 26% to 80% of $MgF_2+CaF_2+SrF_2+BaF_2$.

2. The halide glass according to claim 1, wherein $AlF_3/YF_3$ is 5 or less.

3. The halide glass according to claim 1 or 2, comprising, in mol%, from 11% to 24% of $MgF_2$, from 8% to 33% of $CaF_2$, from 0% to 23% of $SrF_2$, and from 7% to 20% of $BaF_2$.

4. The halide glass according to claim 1 or 2, wherein $(MgF_2+BaF_2)/(MgF_2+CaF_2+SrF_2+BaF_2)$ is from 0.25 to 1.

5. The halide glass according to claim 1 or 2, comprising, in mol%, from 20% to 80% of $YF_3+MgF_2+BaF_2$.

6. The halide glass according to claim 1 or 2, wherein $AlF_3/(YF_3+MgF_2+BaF_2)$ is from 0.2 to 1.

7. The halide glass according to claim 1 or 2, wherein an Abbe number (vd) is from 85 to 110.

8. The halide glass according to claim 1 or 2, wherein a partial dispersion ratio ($\theta$g, F) is from 0.515 to 0.54.

9. An optical element comprising: the halide glass according to claim 1 or 2.

## INTERNATIONAL SEARCH REPORT

| International application No. |
| --- |
| **PCT/JP2023/044915** |

**A.    CLASSIFICATION OF SUBJECT MATTER**

*C03C 3/32*(2006.01)i; *G02B 1/00*(2006.01)i
FI:    C03C3/32; G02B1/00

According to International Patent Classification (IPC) or to both national classification and IPC

**B.    FIELDS SEARCHED**

Minimum documentation searched (classification system followed by classification symbols)

C03C1/00-14/00; G02B1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

INTERGLAD

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2006-248800 A (CENTRAL GLASS CO., LTD.) 21 September 2006 (2006-09-21) paragraph [0001], example 7 | 1-9 |
| X | JP 58-135152 A (NIPPON DENSHIN DENWA KOSHA) 11 August 1983 (1983-08-11) page 1, lower left column, lines 12-13, example 2, sample number 19 | 1-9 |
| X | WO 2015/008621 A1 (CENTRAL GLASS CO., LTD.) 22 January 2015 (2015-01-22) example 1, no. 2 | 1-2, 4-6 |
| X | HU, Hefang et al., Study on fluoride glasses in RF2-AlF3-YF3 system, Mater. Sci. Forum, 01.1985, vol. 5-6, pages 145-154, DOI: 10.4028/www.scientific.net/MSF.5-6.145 page 147, lines 5-7, fig. 3, 4 | 1-5, 9 |
| X | ZOU, Xuellu et al., Fluorescence mechanisms and dynamics of Tm3+ singly doped and Yb3+, Tm3+ doubly doped glasses, J. Non-Cryst. Solids, 01 September 1992, vol. 162, pages 58-67, DOI: 10.1016/0022-3093(93)90741-F 1. Introduction, table 1 | 1-5, 9 |

☑ Further documents are listed in the continuation of Box C.            ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 February 2024** | **27 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

# EP 4 635 921 A1

**INTERNATIONAL SEARCH REPORT**

International application No.

**PCT/JP2023/044915**

**C.    DOCUMENTS CONSIDERED TO BE RELEVANT**

| Category* | Citation of document, with indication, where appropriate, of the relevant passages | Relevant to claim No. |
|---|---|---|
| X | JP 2019-151493 A (SUMITA OPTICAL GLASS, INC.) 12 September 2019 (2019-09-12) paragraph [0002], example 1 | 1-9 |

Form PCT/ISA/210 (second sheet) (July 2022)

9

## INTERNATIONAL SEARCH REPORT
### Information on patent family members

International application No.

**PCT/JP2023/044915**

| Patent document cited in search report | | | Publication date (day/month/year) | Patent family member(s) | Publication date (day/month/year) |
|---|---|---|---|---|---|
| JP | 2006-248800 | A | 21 September 2006 | (Family: none) | |
| JP | 58-135152 | A | 11 August 1983 | (Family: none) | |
| WO | 2015/008621 | A1 | 22 January 2015 | US 2016/0152515 A1 example 1, no. 2<br>EP 3023396 A1<br>CN 105392746 A<br>KR 10-2016-0030280 A<br>TW 201509862 A | |
| JP | 2019-151493 | A | 12 September 2019 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019151493 A

- JP 2016023111 A